# EUROPEAN PATENT APPLICATION

(11) **EP 4 105 653 A1**
(43) Date of publication of application: **21.12.2022**
(21) Application number: 21180402.6
(22) Date of filing: 18.06.2021
(51) Int. Cl.: G01N 29/07, G01N 29/26, B06B 1/00

(54) **SELF-CALIBRATING FLEXIBLE ULTRASOUND ARRAY FOR MEASURING A CURVED OBJECT**

(71) Applicant: NEDERLANDSE ORGANISATIE VOOR TOEGEPAST- NATUURWETENSCHAPPELIJK ONDERZOEK TNO, 2595 DA 's-Gravenhage (NL)
(72) Inventor: VAN DER STEEN, Jan-Laurens Pieter Jacobus, 2595 DA 's-Gravenhage (NL); PETERS, Laurens Christiaan Johannes Maria, 2595 DA 's-Gravenhage (NL); VAN NEER, Paul Louis Maria Joseph, 2595 DA 's-Gravenhage (NL); VOLKER, Arno Willem Frederik, 2595 DA 's-Gravenhage (NL)
(74) Representative: V.O.

(57) **Abstract**

An acoustic system (100) and method for measuring a curved object (Obj). A flexible sheet (20) is provided with an array of acoustic transducers (10) distributed over a surface (20s) of the sheet (20). The sheet (20) is wrapped at least partially around the object (Obj) such that different transducers (10a, 10b, 10c) acoustically contact the object (Obj) from different sides. The transducers (10) are used to generate and/or measure acoustic waves (W) at variable locations around the object (Obj). Spatial coordinates (X,Y,Z) of the variable locations in three dimensional space are dependent on a deformation of the sheet surface (20s) wrapping around the object (Obj). The spatial coordinates (X,Y,Z) of the transducers (10) are determined, while the sheet (20) is wrapped around the object (Obj), based on a set of travel times (Tab,Tbc,Tac) of the acoustic waves (W) sent through the object (Obj), e.g. between different transducers (10a, 10b).

## Description

### TECHNICAL FIELD AND BACKGROUND

The present disclosure relates to acoustic systems and methods for measuring a curved object.

Acoustic systems have various applications for measuring objects and materials such as tissue. For example, mammography and other acoustic images can be generated using pulse-echo measurements performed by acoustic transducers. Information about materials and structures inside the object or tissue can be extracted from measured properties of the acoustic waves traversing and/or reflected of material substructures, such as amplitude, frequency, phase and/or time between a transmitted pulse and received echo. When pulse-echo and/or tomographic measurements are performed between different transducers, reconstruction of the ultrasound imaged may be dependent on *a priori* knowledge of the (relative) positions of the transducers. However, in a conformable, flexible and/or stretchable ultrasound array, the inter-element positions of different transducers may be unknown, impeding reconstruction of the image.

As background US 2020/0278327 A1 describes a phased array calibration for geometry and aberration correction. Various approaches for calibrating the geometry of an ultrasound transducer having multiple transducer elements include: providing an acoustic reflector spanning an area traversing by multiple beam paths of ultrasound waves transmitted from all (or at least some) transducer elements to a focal zone; causing the transducer elements to transmit the ultrasound waves to the focal zone; measuring reflections of the ultrasound waves off the acoustic reflector; and based at least in part on the measured reflections, determining optimal geometric parameters associated with the transducer elements. Unfortunately, the calibration cannot be performed during imaging (*in situ*)*.*

There is a need for an improved acoustic systems and methods, e.g. allowing to easily measure curved objects having variable shape.

### SUMMARY

Aspects of the present disclosure are directed to acoustic systems and methods for measuring a curved object. A flexible sheet is configured to wrap at least partially around the curved object. The flexible sheet comprises an array of acoustic transducers distributed over a surface of the flexible sheet for acoustically contacting the curved object from different sides. The acoustic transducers are configured to generate and/or measure acoustic waves at variable locations relative to each other. Spatial coordinates of the variable locations in three dimensional space will typically be dependent on a deformation of the sheet surface wrapping around the curved object. Advantageously, the spatial coordinates of the acoustic transducers can be determined while the flexible sheet is wrapped around the curved object. In particular, the spatial coordinates can be determined based on a set of travel times of the acoustic waves sent through the curved object, e.g. between various combinations of transducers positioned at different sides of the curved object. The positions of the transducers determined in this way can thus be used in processing acoustic signals of the transducers to generate an image and/or measure other material properties and substructures inside the object.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1A illustrates a perspective view of an acoustic system with a flexible sheet comprising an array of transducers;
FIG 1B illustrates a cross-section view of the flexible sheet wrapped at least partially around a curved object;
FIG 2A illustrates a modelled shape of the flexible sheet based on travel times and/or relative distances measured between transducers on the sheet surface;
FIG 2B illustrates various parametrizations of a modelled shape;
FIG 3A illustrates examples of curved objects;
FIG 3B illustrates measuring a curved object having convex and concave subsection areas.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

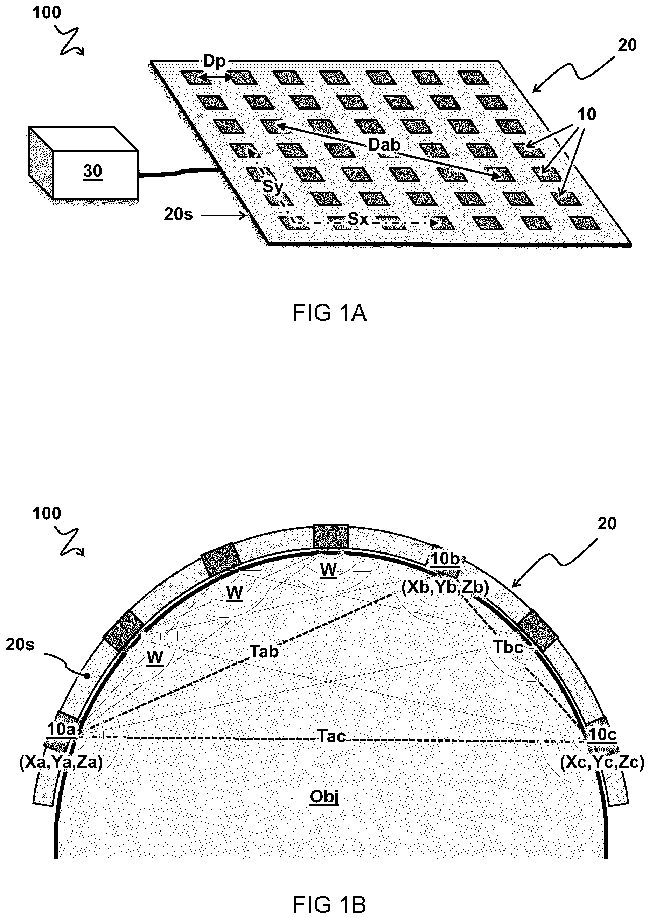

FIG 1A illustrates a perspective view of an acoustic system 100 for measuring a curved object "Obj". FIG 1B illustrates a cross-section view of the flexible sheet 20 wrapped at least partially around a curved object "Obj".

In some embodiments, the flexible sheet 20 comprises an array of acoustic transducers 10. For example, the transducers are distributed over a sheet surface 20s of the flexible sheet 20. For example, the transducers form a one or two dimensional array. In this way the transducers (10) can be used for acoustically contacting the curved object "Obj" from different sides, e.g. at least partially facing each other around a perimeter of the object. In one embodiment, the acoustic transducers 10 are configured to generate and/or measure acoustic waves "W" at variable locations relative to each other determined by the perimeter of the curved object "Obj". Accordingly, the spatial coordinates (X,Y,Z) of the variable locations in three dimensional space are dependent on a deformation of the sheet surface 20s wrapping around the curved object "Obj". In one embodiment, a controller 30 configured to determine the spatial coordinates (X,Y,Z) of the acoustic transducers 10, preferably while the flexible sheet 20 is wrapped around the curved object "Obj".

In some embodiments, the spatial coordinates are determined based on a set of travel times Tab,Tbc,Tac of the acoustic waves "W" sent through the curved object "Obj". Preferably, the set of travel times include, or exclusively consist of, travel times Tab,Tbc,Tac of the acoustic waves "W" between different transducers 10a, 10b, 10c at different sides of the curved object "Obj", most preferably along a direct (shortest) path through the object. For example, a travel time between a pair of transducers 10a,10b is determined based on a measured time difference Tab between a first time stamp Ta of sending an acoustic wave at a first transducer 10a, and a second time stamp Tb of receiving the acoustic wave at a second transducer 10b. For example, determining a respective timestamp and/or travel time may include one or more of detecting a peak of the acoustic wave, cross-correlating the emitted wave measured over the transducer with the arrived pressure pulse, determining the starting point of the received wave, measuring a difference between the phase of the received signal and the phase of the transmitted signal (an arrival time may show up as a linear phase over frequency in the frequency domain). The travel time may also be referred to as time-of-flight. The same acoustic wave (or another acoustic wave), sent from the first acoustic transducer 10a, can also be received by a third acoustic transducer 10c resulting in another time stamp used to determine a travel time Tac between the first and third acoustic transducers 10a,10c. Similarly, a travel time Tbc can be determined between the second and third transducers 10b,10c. These measurements can be performed sequentially and/or in parallel between any pair of transducers in the array to yield a desired set of travel times. For example, acoustic waves can be sent with unique signatures (e.g. frequency) to distinguish a respective origin of the acoustic wave. Travel times can also be determined in the opposite direction for any pair. Also an average or median travel time can be determined between any pair by repeating the measurement in the same or opposite direction. For example, this can also be done to alleviate any noise.

In some embodiments, the acoustic system 100 is configured to function as a tomography based acoustic device. In other or further embodiments, the acoustic system 100 is configured to function as a reflection based acoustic device. Also other or further types of acoustic devices can be envisaged, such as a photoacoustic device. In principle, each acoustic transducer may comprise one or more acoustic elements, e.g. capable of convert between acoustic and electric signals. For example, each acoustic element may comprise a piezoelectric structures, membrane, et cetera. In one embodiment, each acoustic transducer is formed by an area having multiple acoustic elements, e.g. forming a local array. Typically, a respective transducer may be formed by a local area of between 0.1 and 10 mm², preferably between 0.2 and 1 mm². For example, a transducer of area 0.5×0.5 mm² comprises a local array of 100 pillars of 40×40 µm² with pitch 50 pm.

In some embodiments, the (same or other) controller is configured to generate an image of the curved object "Obj" using the array of acoustic transducers 10. In one embodiment, the image is generated based on acoustic waves generated and/or measured by the acoustic transducers 10, and their spatial coordinates (X,Y,Z) determined based on the set of travel times Tab,Tbc,Tac. For example, the acoustic system is configured as an ultrasound imaging device. Typically, the image includes structures and/or properties measured inside the curved object "Obj" using the array of acoustic transducers 10. Also other measurements of the curved object "Obj" surface and/or interior can be envisaged. Preferably, measured properties of the acoustic signals include one or more of an arrival time, amplitude, frequency, and/or phase of the acoustic signals. For example, the (same or other) controller is configured to generate an image or other measurement of structures and/or properties measured inside the curved object "Obj" using a set of amplitudes of the (same or other) acoustic waves "W" sent through the curved object "Obj" between different transducers (tomographic and/or reflection), or back to the same transducer (reflection).

As will be appreciated, the measured signals (and specific processing of those signals, e.g. to produce an image) may depend on the actual (relative) locations of the transducers. For example, in a tomographic measurement, an amplitude or other property of the acoustic signals between a pair of transducers can be processed to determine structures and/or properties of material in a path between the transducers, wherein the origin and destination of the path is determined by the spatial locations of the transducers relative to the object. For example, in a reflection measurement, an echo time, e.g. in combination with amplitude, or other property of the acoustic wave back to the same or other transducer can be processed to determine structures and/or properties of material in the reflection path, wherein the origin and destination of the path is determined by the spatial locations of the one or more transducers relative to the object. When the respective paths of different signals can be located, e.g. mapped to the object, the signals may be combined to generate the image or other measurement. Accordingly, the measurements of structures and/or properties inside the object can be processed based on the measured acoustic signals (e.g. reflection and/or tomographic) in accordance with the spatial coordinates (X,Y,Z) of the transducers determined as described herein.

In some embodiments, imaging or other measurement of the object is performed subsequent to determining the spatial coordinates (X,Y,Z) of the acoustic transducers 10. In other or further embodiments, the spatial coordinates (X,Y,Z) of the acoustic transducers 10 are determined while the measurement of the curved object "Obj" takes place; or intermittently between such measurements. For example, tomographic and/or reflection based measurements can be performed on a body while allowing the body to change shape (e.g. due to breathing motion) by constantly updating the measured positions of the transducers.

In principle the same or similar acoustic signals used for determining the spatial coordinates can also be used in imaging the object. For example, structures and/or properties inside the object may be determined based on reflection and/or absorption of acoustic waves between different transducers. Typically, the measured travel time between a pair of transducers is the time it takes for a wave to travel a direct path between the transducers transmitted through any material there between. The direct waves may allow a relatively easy reconstruction of the (Euclidian) distance between the transducers; as well as mapping or imaging properties of structures along the (direct) path.

Alternatively, or additionally, also indirect paths may be considered such as acoustic waves reflecting off internal structures inside the object and arriving at the same or different transducers. For example, when acoustic waves are reflected off a specific internal structure or scattering element from different transducers, respective reflection times (to the originating transducer or other transducer) may allow reconstructing respective distances between the specific internal structure and each of the transducers. This may also allow determining the spatial coordinates (X,Y,Z) of the acoustic transducers 10 themselves. The indirect waves reflecting off internal structures may also be used in imaging the structures, e.g. after the spatial coordinates (X,Y,Z) of the acoustic transducers 10 have been determined or in an iterative procedure wherein the spatial coordinates are varied until a self-consistent image can be constructed.

In some embodiments, acoustic waves in a first frequency range are used to determine the set of travel times for determining the spatial coordinates (X,Y,Z) of the acoustic transducers 10. In other or further embodiments, acoustic waves in a second frequency range are used to determine an image or other measurement of the object. In one embodiment, the first frequency range is selected to have minimum interaction with material and/or internal structures of the object. This may allow the waves to travel through the object relatively undisturbed. For example, the signal strength and/or travel time may be relatively unaffected by the material and/or internal structures of the object. In another or further embodiment, the second frequency range is selected to have more interaction with material and/or internal structures of the object. For example, the second frequency is selected so that the acoustic waves are reflected and/or absorbed to facilitate reflection and/or tomographic measurements. In one embodiment, the second frequency range is different, e.g. higher, than the first frequency range. Alternatively, the first and second frequency ranges may be the same or similar. For example, a frequency range may be selected that provides a relatively constant wave velocity while providing sufficient absorption or reflection in substructures of the object to perform tomographic and/or reflection based measurements.

Depending on the type of measurement, different ultrasound frequencies may be used. For example, tomography based measurement typically use an ultrasound frequency between 1 - 5 MHz, preferably between 2 - 3 MHz. Reflection based measurement typically use higher ultrasound frequencies, e.g. more than 3.5 MHz, preferably more than 7 MHz. For example, in cardiac/liver imaging typically frequencies of 3.5 MHz are used, whereas in carotid imaging typically frequencies of 7 MHz are used Photoacoustic measurements typically use lower ultrasound frequencies, e.g. less than 2 MHz, The frequency may also depend on a size of the structure being imaged.

In some embodiments, each transducer has a set of predetermined surface coordinates (Sx,Sy) along the sheet surface 20s. In other or further embodiments, the controller 30 is configured to determine the spatial coordinates (X,Y,Z) of the acoustic transducers 10 (while the flexible sheet 20 is wrapped around the curved object "Obj") further based on the predetermined surface coordinates (Sx,Sy). In one embodiment, the surface coordinates (Sx,Sy) comprise two dimensional coordinates of a respective position of each transducer, e.g. a set of absolute (X,Y) positions as measured from an origin on the sheet and/or relative positions measured between transducers. In another or further embodiment, the surface coordinates (Sx,Sy) comprise a sequence or relative position of each transducers from which the actual position can be calculated, e.g. in combination with known distances between the transducers.

In some embodiments, transducers in the array have predetermined surface distances there between, in particular along the sheet surface 20s (e.g. Dp,Dab as indicated). In other or further embodiments, the controller 30 is configured to determine the spatial coordinates (X,Y,Z) of the acoustic transducers 10 (while the flexible sheet 20 is wrapped around the curved object "Obj") further based on the predetermined surface distances (D and/or Dab). In one embodiment, the predetermined surface distances D comprise a distance between (nearest) neighboring transducers, e.g. a fixed or variable periodic distance. For example, a respective surface distance Dab between any set of transducers 10a, 10b is calculated based on the periodic distance D and a set of relative surface coordinates (e.g. counting the number of transducers along a row or column). In another or further embodiment, the respective surface distance Dab between a set of transducers 10a, 10b is calculated based on a table storing a respective (absolute) surface position (Xa,Ya;Xb,Yb) of each transducer (e.g. measured in cm from an origin). For example, the absolute surface positions from the table can be subtracted to determine a relative position (ΔXab=Xa-Xb; ΔYab=Ya-Yb) between transducers, and the distance can be calculated using Pythagorean theorem (Dab² = ΔXab² + ΔYab²). In another or further embodiment, a table is used which directly stores for one or more (preferably each) transducer the respective surface distance Dab to one or more, preferably all, other transducers in the array. In this way, the surface distance can be quickly retrieved for any set of transducers in the array.

As will be understood, the predetermined surface coordinates (Sx,Sy) and/or distances (D,Dab) are preferably measured along the surface of the flexible sheet 20 when the sheet is flat, e.g. placed on a horizontal flat surface. Typically, the distances along the flexible sheet may represent maximum distances which can be shortened when the sheet is curved around the object. The distance through the object may be referred as the direct Euclidian distance (shortest line segment or chord), e.g. shorter than a surface distance along the curved sheet surface. Alternatively, it can also be envisaged that the flexible sheet 20 has some intrinsic curvature which may be adapted, e.g. stretched to the object to be measured. For example, an intrinsically concave sheet can be stretched or compressed to wrap around a convex object.

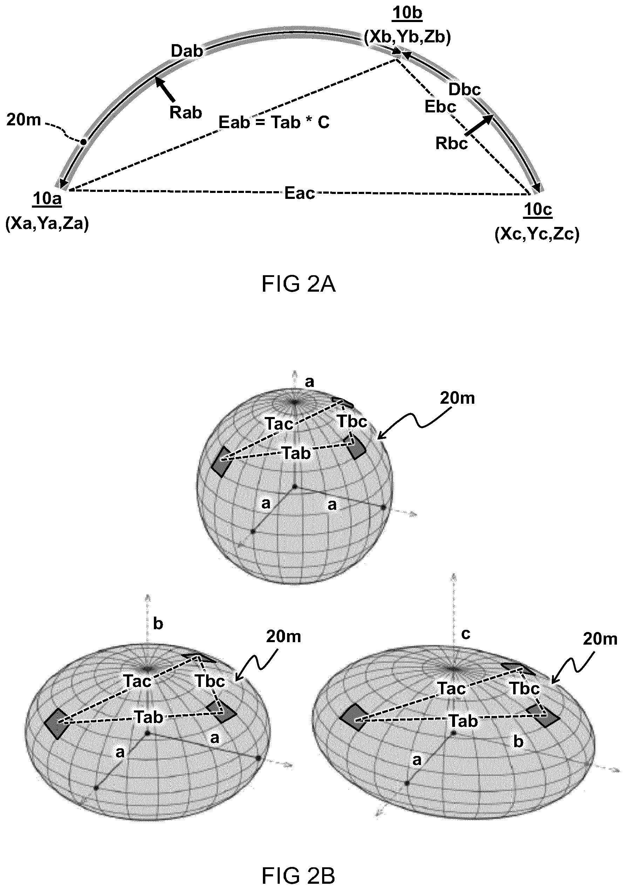

FIG 2A illustrates a modelled shape 20m of the flexible sheet 20 based on travel times and/or relative distances Eab,Eac,Ebc measured between transducers 10a, 10b, 10c on the sheet surface 20s. Some embodiments comprise determine a modelled shape 20m of the sheet surface 20s, e.g. by the controller. For example, the modelled shape is calculated based on travel times Tab,Tbc,Tac between pairs of transducers 10a, 10b; 10b, 10c; 10a, 10c. In one embodiment, each transducer has a modelled position constrained to the sheet surface 20s. In another or further embodiment, modelled positions of the transducers are constrained by a set of predetermined surface coordinates (Sx,Sy) of the acoustic transducers 10 on the flexible sheet 20 and/or surface distances Dab there between along the sheet surface 20s.

In some embodiments, a degree of curvature Rab of the sheet surface 20s is determined based on the set of travel times Tab,Tbc,Tac between one or more pairs of transducers. For example, the degree of curvature Rab can be constrained in accordance with a bendability of the flexible sheet 20 and/or expected curvature of the object. In one embodiment, a shape of the sheet surface 20s is determined based on one or more degrees of curvature Rab of the flexible sheet 20 between respective pairs of transducers.

In some embodiments, a Euclidian distance Eab is determined between a pair of transducers 10a, 10b based on a travel time Tab of acoustic waves "W" sent through the curved object "Obj" between a first transducer 10a and a second transducer 10b of the pair of transducers 10a, 10b. In one embodiment, the Euclidian distance through the object is determined based on the travel time and a wave velocity "C" of the acoustic waves through the object. For example, the velocity of the acoustic waves can be predetermined, measured, assumed, and/or modelled (e.g. as a parameter). In one embodiment, a velocity of the acoustic waves is predetermined, e.g. using a measurement through the object, or a model object, between a pair of transducers at a known distance there between. In another or further embodiment, a velocity of the acoustic waves is measured one or more pairs of transducers in the array, e.g. by assuming that the surface distance between closest neighboring transducers is similar or the same as the distance through the object. In another or further embodiment, a velocity of the acoustic waves is assumed, e.g. based on known wave transmission characteristics of the object. In another or further embodiment, a velocity of the acoustic waves is used as parameter in a modelling of the sheet layout/shape. In some embodiments, the velocity "C" is assumed to be constant throughout the object. In other or further embodiments, the velocity "C" can be variable, e.g. depending on substructures inside the object. For example, the substructures can be determined by the acoustic system itself, e.g. iteratively. For example, a pulse-echo mode is used.

In some embodiments, the spatial coordinates (X,Y,Z) of the acoustic transducers 10 are determined by comparing an Euclidian distance Eab with a surface distance Dab, for each pair of transducers 10a, 10b in at least a subset 10a, 10b; 10a, 10c; 10b, 10c of the array of transducers 10. In one embodiment, the Euclidian distance Eab between the pair of transducers 10a, 10b is determined based on a travel time Tab of acoustic waves "W" sent through the curved object "Obj" between a first transducer 10a and a second transducer 10b of the pair of transducers 10a, 10b. In another or further embodiment, the surface distance Dab between the first transducer 10a and the second transducer 10b along the sheet surface 20s is based on predetermined information about relative or absolute positions of the transducers 10.

Typically, the respective Euclidian distance Eab between a pair of transducers 10a, 10b will be shorter than the respective surface distance Dab depending on a degree of curvature of the flexible sheet 20. For example, when the sheet has a relatively high degree of curvature between the pair of transducers 10a,10b the Euclidian distance Eab there between will be relatively short. For example, when the sheet has a relatively low degree of curvature between the pair of transducers 10a,10b, the Euclidian distance Eab there between will be relatively long, e.g. approaching the surface distance Dab when the sheet is essentially not curved between the transducers. As will be appreciated this can be used to determine a degree of curvature between various pairs of transducers.

In some embodiments, the spatial coordinates (X,Y,Z) of the acoustic transducers 10 are determined by calculating a set of curvatures Rab,Rbc comparing the respective Euclidian distance Eab,Ebc with the respective surface distance Dab,Dbc for respective pairs of transducers 10a, 10b; 10b, 10c in at least a subset 10a, 10b; 10a, 10c; 10b, 10c of the array of transducers 10. In one embodiment, a curvature between a pair of transducers is determined by assuming an arc length between the transducers equals their relative surface distance Dab (optionally scaled by a stretching/compression factor of the sheet). In another or further embodiment, a curvature between a pair of transducers is determined by assuming a constant radius of curvature between pairs of transducers. For example, the combination of a specific arc length and Euclidian distance between points may determine a specific radius of curvature. In principle, the radius of curvature can be different for different sections of the sheet surface 20s, assumed to be the same, or modeled with a particular shape.

Preferably, each subset for determining a respective curvature includes at least three transducers to determine a triangle of relatively distances/travel times; more preferably at least four to determine a three-dimensional shape (e.g. three sided pyramid) based on distances between each pair of transducers in the subset. For example, the controller is configured to determine a mesh surface with respective transducers formed at respective nodes of the mesh and/or at a respective center of a mesh element. For example, respective curvatures of line segments in the mesh is based on the determined set of curvatures. Of course the model of the surface can in general be fit to any set of measurements. In one embodiment, the entire curve is fitted based on all measurement data, e.g. a full inversion.

In some embodiments, the spatial coordinates (X,Y,Z) of the acoustic transducers 10 are determined using a model of the sheet surface 20s including respective positions of modelled transducers on the modelled sheet surface. In one embodiment, the model is used to calculate a set of modelled travel times between the modelled transducers. In another or further embodiment, the modelled travel times are dependent on respective distances between the modelled transducers. In another or further embodiment, the respective distances between the modelled transducers are dependent on their respective positions on the modelled sheet surface and a variable shape of the modelled sheet surface. In another or further embodiment, the variable shape of the modelled sheet surface is adjusted to fit the modelled travel times with the measured set of travel times Tab,Tbc,Tac. In another or further embodiment, the spatial coordinates (X,Y,Z) of the acoustic transducers 10 are determined based on the respective positions of the modelled transducers on the modelled sheet.

Various constraints can be applied to the modelled surface for allowing a convergent fit. In one embodiment, the model is constrained by assuming a continuity of the sheet surface and/or its curvature. For example, the sheet is modeled as an interconnected mesh. In another or further embodiment, the model is constrained by a maximum curvature (e.g. minimum radius) of the sheet and/or object. For example, the sheet is assumed to have a certain flexibility and/or bendability. For example, the object is assumed to have a certain maximum curvature (e.g. minimum radius). In another or further embodiment, the model is constrained by a maximum stretchability of the flexible sheet 20. For example, the flexible sheet 20 can be essentially not stretchable so any predetermined distances along the sheet surface can be fixed; or the flexible sheet 20 can have some stretchability so predetermined distances along the sheet surface can be variable, e.g. adjusted by a variable scaling factor according to the model. For example, the flexible sheet 20 may allow some stretching and/or compression to wrap around a spherical object.

In some embodiments, distances between the transducers along the sheet surface are measured, preferably using (guided) waves traveling along and/or inside the flexible sheet 20 or another interface/connection between the transducers. In one embodiment, waves for measuring transducer inter-distance comprise Lamb waves, e.g. extensional (A0) and/or flexural (S0) guided waves. In another or further embodiment, waves for measuring transducer inter-distance comprise interface waves (e.g. Scholte waves) traveling along the sheet/tissue interface. If the sheet is used in combination with a solid the interface the waves can be referred to as Stoneley waves. Regular compressional waves (for tissue, or compressional/shear waves when the sample is solid) can also be used to determine the 3D shape of the transducer sheet. For example, the measured distance between transducers can be used as an alternative to the predetermined distances, or used in addition for correcting predetermined distances in case of stretching/compression. In particular, for the case of a stretchable transducer sheet, it can be advantageous to determine the distances between the transducers on the transducer sheet separately from the 3D shape of the transducer sheet (by using guided waves traveling along the transducer sheet for the former and using bulk waves (compressional waves/shear waves for the latter). As one advantage, for the inversion of the 3D shape, the minimum degrees of freedom may be used, allowing for the reconstruction of more complex 3D shapes of the transducer sheet or a more robust reconstruction process.

In some embodiments, the model is constrained by predetermined locations (surface coordinates) of the transducers on the surface. For example, the predetermined locations are set in the model as a constraint on the maximum distances between transducers through the object and/or fixed distances along the sheet surface. Instead of a freeform surface, the shape can be restricted to a specific shape, e.g. spherical, cylindrical, et cetera. This may limit the number of free parameters to allow a more constrained (easier) fit.

In some embodiments, the fit is performed in an iterative procedure, e.g. minimizing a difference between the modelled and measured travel times. In other or further embodiments, the fit is performed analytically, e.g. directly calculating a best fit. Also combinations of calculations and/or fit routines are possible. Also other algorithms such as machine learning / artificial intelligence can be used, e.g. to calculate a most probable shape of the flexible sheet.

In some embodiments, multiple fits are performed for different subsets of the transducers to determine a local shape or curvature in corresponding subsection areas of the sheet. For example, the multiple fits can be combined to provide the overall shape. In one embodiment, a subset of two transducers is used to form a line determining a specific distance between the two transducers. So the modelled sheet can be curved between the transducers to fit the specific distance. In another or further embodiment, a subset of three transducers is used to form a triangle determining specific distances between the three transducers. So the modelled sheet can be curved between the transducers to fit the specific distances. In another or further embodiment, a subset of four transducers can form a three sided pyramid (e.g. with one central point surrounded by three other points). Using a subset of four or more points can allow to more directly determine a three dimensional shape of a subsection area of the sheet. Also many more transducers can be included in the fit. In some embodiments, the fit is performed globally using all measured travel times. For example, this may be performed after a general shape is determined based on local fits, or a predetermined general shape of the object.

In some embodiments, a set of current spatial coordinates (X,Y,Z) of the acoustic transducers 10 is determined by adjusting a set of predetermined spatial coordinates of the acoustic transducers 10 in accordance with the set of travel times Tab,Tbc,Tac. In one embodiment, the set of predetermined spatial coordinates comprises a set of initial coordinates based on an initially assumed shape of the curved object "Obj". For example, a selection of one or more predetermined shapes, such as a sphere, cylinder, et cetera, can be input (e.g. into the controller) as an initial assumed shape. This can make it easier to fit the shape. In another or further embodiment, the set of predetermined spatial coordinates comprise previously measured and/or fitted coordinates of the acoustic transducers 10. For example, the spatial coordinates of the acoustic transducers 10 are continuously or intermittently measured or updated to keep track of an object which can change shape (e.g. the body when breathing). Alternatively or in addition to modelling the sheet surface as a mesh, it can also be envisaged to model the sheet surface as a continuous parametrized surface, e.g. according to the surface equation of a predetermined shape.

In some embodiments, a travel time Tac is measured of acoustic waves "W" sent through the curved object "Obj" between a first acoustic transducer 10a and a third transducer 10c. In one embodiment, a second transducer 10b is arranged along a surface path over the sheet surface of the flexible sheet between the first acoustic transducer 10a and the third transducer 10c. In another or further embodiment, spatial coordinates Xb,Yb,Zb of the second transducer 10b are determined based at least in part on interpolating predetermined surface coordinates and/or surface distances Dab,Dbc of the second transducer 10b relative to the first acoustic transducer 10a and third transducer 10c on a modelled surface 20m of the flexible sheet 20. For example, when it known from the predetermined distances and/or coordinates of the transducer array where the second transducer 10b is positioned between the first acoustic transducer 10a and third transducer 10c along the surface, and the layout of the surface is modelled based on the various travel times, e.g. between the first acoustic transducer 10a and third transducer 10c, the position of the second transducer 10b can be interpolated. This may be used alternatively, or in addition to direct measurements of acoustic waves between the first acoustic transducer 10a and second transducer 10b and/or third transducer 10c and second transducer 10b.

FIG 2B illustrates various parametrizations of a modelled shape 20m. In some embodiments, a modelled shape of the flexible sheet is based on a predetermined parameterized shape having a set of variable scaling parameters a,b,c and/or coordinates. For example, the coordinates may include an (x0,y0,z0) origin of the shape. Using a parametrized shape may limit the number of free parameters compared to a more general mesh. For example, the set of scaling parameters and/or coordinates is fitted in accordance with the set of measured travel times Tab,Tbc,Tac. In some embodiments, the modelled shape 20m can be parameterized as a (subsection area of) a sphere or ellipsoid. An ellipsoid is a surface that may be obtained from a sphere by deforming it by means of directional scalings, or more generally, of an affine transformation. For example, an ellipsoid may be uniquely defined by six parameters (x0,y0,z0,a,b,c). These may be determined by a set of at least seven independent measurements. In practice the information in the measurements may not be orthogonal and the signal-to-noise (SNR) may be limited, so more measurements may be needed. To improve orthogonality/independence of different measurements, preferably a transducers are selected which are spread at different positions around the object.

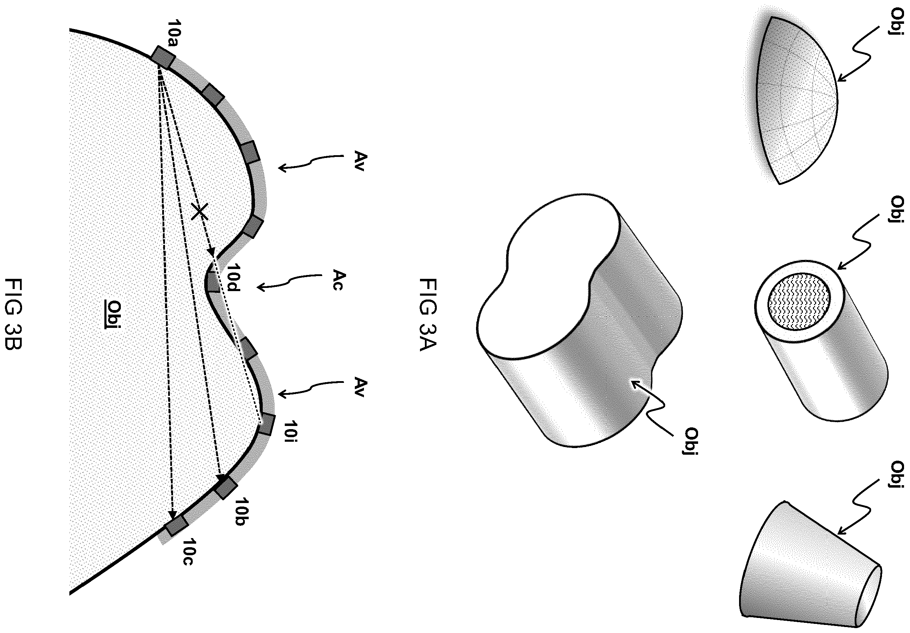

FIG 3A illustrates examples of various curved objects "Obj". In some embodiments, the acoustic system is used to measure a (breast) tissue. In this case an initial mesh shape and/or parametrized functional surface may be determined using part of a spherical surface. Also other tissues or other structures may have (partial) spherical shapes. In other or further embodiments, the curved object "Obj" may have a tubular or cylindrical shape. For example, the acoustic system can be used to measure inside a pipe which may have an unknown or variable diameter. Also, other parametrized shapes can be envisaged such as a (frusto) conical shape, or any surface that can be described by an analytical function, or otherwise. For example, the acoustic system is used to measure other parts of the body, or any other curved object. As will be appreciated, the present methods and systems can be advantageously used to measure curved objects having convex features, which allow acoustic waves to travel through the object between different transducers, e.g. at least partially facing each other. Alternatively, or additionally, the curved object may also comprise concave features.

FIG 3B illustrates measuring a curved object "Obj" having convex and concave subsection areas Av,Ac. In one embodiment, a convex subsection area of the flexible sheet 20 is determined based on one or more acoustic signals being blocked along a path between a pair of acoustic transducers 10a, 10i through the convex subsection area. It will be understood that a convex subsection area of the flexible sheet 20, as seen from its front side facing the object, may correspond with the concave subsection area Ac of the object; vice versa the convex subsection areas Av of the object may correspond to concave subsection areas of the flexible sheet 20. For example, a first transducer 10a sends out acoustic signals which are received by transducers 10c and 10d, but not 10i, because an edge or perimeter of the object formed at its concave subsection area Ac may block the direct path. The absence of such signal on the transducer 10i may then be used to infer the concave subsection area of the object and/or convex subsection area of the flexible sheet 20. Alternatively, or additionally, the proximity of the transducer 10d to the transducer 10a (and/or other transducers, e.g. 10c) may also be used to determine the local shape of the sheet surface.

For the purpose of clarity and a concise description, features are described herein as part of the same or separate embodiments, however, it will be appreciated that the scope of the invention may include embodiments having combinations of all or some of the features described. Aspects described with reference to particular systems and devices can also be embodied as corresponding methods for acoustically measuring a curved object. In one embodiment, the method comprises providing a flexible sheet 20 with an array of acoustic transducers 10 distributed over a sheet surface 20s of the flexible sheet 20. In another or further embodiment, the method comprises wrapping the flexible sheet 20 at least partially around the curved object "Obj" such that the acoustic transducers 10 acoustically contact the curved object "Obj" from different sides. In another or further embodiment, the method comprises using the acoustic transducers 10 to generate and/or measure acoustic waves "W" at variable locations around the curved object "Obj". For example, the spatial coordinates (X,Y,Z) of the variable locations in three dimensional space are dependent on a deformation of the sheet surface 20s wrapping around the curved object "Obj". In another or further embodiment, the method comprises determining the spatial coordinates (X,Y,Z) of the acoustic transducers 10, preferably while the flexible sheet 20 is wrapped around the curved object "Obj". In a preferred embodiment, the method further comprises imaging and/or measuring the curved object based on acoustic waves generated and/or measured by the acoustic transducers 10, and their spatial coordinates (X,Y,Z) determined based on the set of travel times Tab,Tbc,Tac. These and other aspects can also be embodied as a (non-transitory) computer-readable medium storing instructions that, when executed causes performance of the methods and systems described herein.

While embodiments were shown for various layouts of acoustic transducers on a flexible sheet, also alternative ways may be envisaged by those skilled in the art having the benefit of the present disclosure for achieving a similar function and result. For example, the flexible sheet may be omitted when the transducers are placed directly on a curved object to be measured. Instead of the flexible sheet also other or similar structures can be used to hold the transducers together, e.g. flexible wires and/or a net between the transducers. The various elements of the embodiments as discussed and shown offer certain advantages, such as a self-calibrating conformable acoustic device. Of course, it is to be appreciated that any one of the above embodiments or processes may be combined with one or more other embodiments or processes to provide even further improvements in finding and matching designs and advantages. It is appreciated that this disclosure offers particular advantages to acoustic imaging, and in general can be applied for any application wherein respective positions of acoustic transducers are to be determined.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. An acoustic system (100) for measuring a curved object (Obj), the system comprising
a flexible sheet (20) configured to wrap at least partially around the curved object (Obj), the flexible sheet (20) comprising an array of acoustic transducers (10) distributed over a sheet surface (20s) of the flexible sheet (20) for acoustically contacting the curved object (Obj) from different sides, wherein the acoustic transducers (10) are configured to generate and/or measure acoustic waves (W) at variable locations relative to each other, wherein spatial coordinates (X,Y,Z) of the variable locations in three dimensional space are dependent on a deformation of the sheet surface (20s) wrapping around the curved object (Obj); and
a controller (30) configured to determine the spatial coordinates (X,Y,Z) of the acoustic transducers (10), while the flexible sheet (20) is wrapped around the curved object (Obj), based on a set of travel times (Tab,Tbc,Tac) of the acoustic waves (W) sent through the curved object (Obj).

2. The acoustic system according to claim 1, wherein the set of travel times (Tab,Tbc,Tac) includes, or exclusively consists of, travel times of the acoustic waves (W) between different transducers (10a, 10b, 10c) at different sides around a perimeter of the curved object (Obj).

3. The acoustic system according to any of the preceding claims, wherein the controller (30) is configured to generate an image of the curved object (Obj) using the array of acoustic transducers (10), wherein the image is generated based on acoustic waves generated and/or measured by the acoustic transducers (10), and their spatial coordinates (X,Y,Z) determined based on the set of travel times (Tab,Tbc,Tac).

4. The acoustic system according to any of the preceding claims, wherein each transducer has a set of predetermined surface coordinates (Sx,Sy) and/or predetermined surface distances (Dp,Dab) there between along the sheet surface (20s), wherein the controller (30) is configured to determine the spatial coordinates (X,Y,Z) of the acoustic transducers (10) further based on the predetermined surface coordinates (Sx,Sy) and/or predetermined surface distances (Dp,Dab).

5. The acoustic system according to any of the preceding claims, wherein the controller (30) is configured to determine a modelled shape (20m) of the sheet surface (20s), wherein the modelled shape (20m) is calculated based on travel times (Tab,Tbc,Tac) between pairs of transducers (10a, 10b;
10b, 10c; 10a, 10c), wherein each transducer has a modelled position constrained to the sheet surface (20s), wherein the modelled positions of the transducers are further constrained by a set of predetermined surface coordinates (Sx,Sy) of the acoustic transducers (10) on the flexible sheet (20) and/or surface distances (Dab) there between along the sheet surface (20s).

6. The acoustic system according to any of the preceding claims, wherein the flexible sheet (20) is stretchable allowing a variable surface distance (Dab) between the acoustic transducers (10) along the sheet surface (20s), wherein the acoustic transducers (10) are further configured to generate and/or measure guided waves traveling inside and/or along the sheet surface (20s) for determining the variable surface distance (Dab).

7. The acoustic system according to any of the preceding claims, wherein the controller (30) is configured to calculate the modelled shape based on a predetermined parameterized shape according to an analytical function defined by a set of variable scaling parameters (a,b,c) and/or coordinates.

8. The acoustic system according to any of the preceding claims, wherein the controller (30) is configured to determine a set of current spatial coordinates (X,Y,Z) of the acoustic transducers (10) by adjusting a set of predetermined spatial coordinates of the acoustic transducers (10) in accordance with the set of travel times (Tab,Tbc,Tac).

9. The acoustic system according to any of the preceding claims, wherein the controller (30) is configured to determine a convex subsection area of the flexible sheet (20) based on one or more acoustic signals being blocked along a path between a pair of acoustic transducers (10a,10i) through the convex subsection area.

10. The acoustic system according to any of the preceding claims, wherein the controller (30) is configured to determine the spatial coordinates (X,Y,Z) of the acoustic transducers (10), by comparing, for each pair of transducers (10a, 10b) in at least a subset (10a, 10b; 10a,10c; 10b,10c) of the array of transducers (10):
a Euclidian distance (Eab) between the pair of transducers (10a, 10b) based on a travel time (Tab) of acoustic waves (W) sent through the curved object (Obj) between a first transducer (10a) and a second transducer (10b) of the pair of transducers (10a, 10b), and
a surface distance (Dab) between the first transducer (10a) and the second transducer (10b) along the sheet surface (20s) based on predetermined information about relative or absolute positions of the transducers (10).

11. The acoustic system according to any of the preceding claims, wherein a degree of curvature (Rab) of the sheet surface (20s) is determined based on the set of travel times (Tab,Tbc,Tac) between one or more pairs of transducers, wherein a shape of the sheet surface (20s) is determined based on one or more degrees of curvature (Rab) of the flexible sheet (20) between respective pairs of transducers, wherein the controller (30) is configured to determine the spatial coordinates (X,Y,Z) of the acoustic transducers (10), by calculating a set of curvatures (Rab,Rbc) comparing the respective Euclidian distance (Eab,Ebc) with the respective surface distance (Dab,Dbc) for respective pairs of transducers (10a, 10b; 10b, 10c) in at least a subset (10a, 10b; 10a, 10c; 10b, 10c) of the array of transducers (10).

12. The acoustic system according to any of the preceding claims, wherein the controller (30) is configured to determine the spatial coordinates (X,Y,Z) of the acoustic transducers (10) using a model of the sheet surface (20s) including respective positions of modelled transducers on the modelled sheet surface, wherein the model is used to calculate a set of modelled travel times between the modelled transducers, wherein the modelled travel times are dependent on respective distances between the modelled transducers, wherein the respective distances between the modelled transducers are dependent on their respective positions on the modelled sheet surface and a variable shape of the modelled sheet surface, wherein the variable shape of the modelled sheet surface is adjusted to fit the modelled travel times with the measured set of travel times (Tab,Tbc,Tac), wherein the spatial coordinates (X,Y,Z) of the acoustic transducers (10) are determined based on the respective positions of the modelled transducers on the modelled sheet.

13. The acoustic system according to any of the preceding claims, wherein the controller (30) is configured to measure a travel time (Tac) of acoustic waves (W) sent through the curved object (Obj) between a first acoustic transducer (10a) and a third transducer (10c), wherein a second transducer (10b) is arranged along a surface path over the sheet surface of the flexible sheet between the first acoustic transducer (10a) and the third transducer (10c), wherein the controller (30) is configured to determine spatial coordinates (Xb,Yb,Zb) of the second transducer (10b) based at least in part on interpolating predetermined surface coordinates and/or surface distances (Dab,Dbc) of the second transducer (10b) relative to the first acoustic transducer (10a) and third transducer (10c) on a modelled surface (20m) of the flexible sheet (20).

14. A method for acoustically measuring a curved object (Obj), the method comprising
providing a flexible sheet (20) with an array of acoustic transducers (10) distributed over a sheet surface (20s) of the flexible sheet (20);
wrapping the flexible sheet (20) at least partially around the curved object (Obj) such that the acoustic transducers (10) acoustically contact the curved object (Obj) from different sides;
using the acoustic transducers (10) to generate and/or measure acoustic waves (W) at variable locations around the curved object (Obj), wherein spatial coordinates (X,Y,Z) of the variable locations in three dimensional space are dependent on a deformation of the sheet surface (20s) wrapping around the curved object (Obj); and
determining the spatial coordinates (X,Y,Z) of the acoustic transducers (10), while the flexible sheet (20) is wrapped around the curved object (Obj), based on a set of travel times (Tab,Tbc,Tac) of the acoustic waves (W) sent through the curved object (Obj).

15. A non-transitory computer-readable medium storing instructions that, when executed by an acoustic system (100), causes the acoustic system to
control a set of acoustic transducers (10) to generate and/or measure acoustic waves (W) at variable locations around a perimeter of a curved object (Obj), wherein spatial coordinates (X,Y,Z) of the variable locations in three dimensional space depend on the perimeter of the curved object (Obj);
determine the spatial coordinates (X,Y,Z) of the acoustic transducers (10) based on a set of travel times (Tab,Tbc,Tac) of the acoustic waves (W) sent through the curved object (Obj); and
generate an image of the object by processing acoustic signals measured from at least a subset of the acoustic transducers (10), wherein the acoustic signals are processed based on the determined spatial coordinates (X,Y,Z).
